**Europäisches Patentamt**

(19) **European Patent Office**

**Office européen des brevets**

(11) Publication number: **0 481 353 B1**

## (12) EUROPEAN PATENT SPECIFICATION

(45) Date of publication of patent specification :
05.07.95 Bulletin 95/27

(51) Int. Cl.⁶ : **H02M 7/17, G05F 1/563, H02M 1/12**

(21) Application number : **91117259.1**

(22) Date of filing : **10.10.91**

(54) **High power power supply.**

(30) Priority : **19.10.90 DE 4033281**

(43) Date of publication of application :
**22.04.92 Bulletin 92/17**

(45) Publication of the grant of the patent :
**05.07.95 Bulletin 95/27**

(84) Designated Contracting States :
**CH DK FR GB LI**

(56) References cited :
**EP-A- 0 371 555**
**WO-A-88/05224**
**DE-C- 3 524 169**
**US-A- 3 643 150**

(73) Proprietor : **Bruker Analytische Messtechnik GmbH**
**Silberstreifen**
**D-76287 Rheinstetten (DE)**

(72) Inventor : **Goebel, Klaus**
**Hebelstrasse 1**
**W-7512 Rheinstetten 3 (DE)**

(74) Representative : **Kohler - Schmid + Partner**
**Patentanwälte**
**Ruppmannstrasse 27**
**D-70565 Stuttgart (DE)**

## Description

The invention concerns a high power power supply for power in excess of five kilowatts to transform a three phase alternating current into a direct current for the purpose of producing an adjustable highly constant direct current, with a three phase matching and isolation transformer followed by at least one regulatable bridge rectifier exhibiting power thyristors, with a phase controlled regulation of the power thyristors, and with at least one charging capacitor at the output of the bridge rectifier circuit.

The invention can be applied to high power power supplies of the kind used to supply electromagnets in the areas of electro-medicine and nuclear physics.

The coils of large resistive electromagnets require high electrical power for their current supply, lying in the range between 10 and 500 kilowatts. The direct currents, which lie in the range of several hundreds of amperes, must be regulatable, extremely constant, and exhibit minimum ripple. The current stability and the voltage ripple should be in the ppm range.

Normally the energy necessary for large electromagnets is extracted from the usual three phase supply power by means of a matching and isolation transformer followed by a rectifying circuit. The desired highly constant output current necessitates a very wide band pass and highly amplifying regulation system along with the corresponding measurement devices. These requirements are, in connection with the corresponding regulation amplifications, satisfied by linear regulators whose transistor final control element contains power transistors.

Should, within the rectifier circuit, thyristors with adjustable utilization of the sine-shaped power voltage by means of phase controlled regulation be used for the regulation and/or adjustment of the electrical power within the predetermined limits of the electromagnets given by the operation conditions, then inadequately suppressible electrical interferences at various frequencies often result locally, distributed over the entire power network, and radiated into the surroundings which, in particular, effect the regulation system and thereby interfere with the achievement of the stability of the output current unavoidably necessary for operation as well as with the performance of apparatuses in the vicinity.

The cause of the electrical interference is the discontinuous operation of the power converter regardless if one is dealing with diodes or thyristors. In addition to distortion with whole number multiples of the power frequency, the shutting on and off procedure of the semiconductors results in high frequency switching spikes. While the low frequency currents interfere conductively with the surroundings, the high frequency currents are radiated in the form of interfering electromagnetic fields by means of magnetic construction elements and as well as by short conducting pieces. In this connection thyristors are, in particular, especially disruptive since the current through the semi-conductor valves is not extinguished immediately at the zero point crossing, rather continues to initially flow even for negative voltage values until the bases zone is free of charge carriers and the off-state voltage can be established - there exists a recovery effect. The commutation problems which result in consequence thereof cause the interferences referred to. In conventional thyristor circuits, with large current flow in one phase, another phase with a large differential voltage is fired and the current conducting rectifier is effectively closed from behind. The extremely steep off-commutation leads to a long reverse recovery. Nearly short circuit conditions reign until the blocking capability is developed.

It is known in the art that a storage choke of very large inductance is always connected between the bridge rectifier circuit and the load in order to smooth the current pulse and to isolate the rapid voltage changes from the load. Significant capacitance is first located following the storage inductor on the load side for filtering purposes. A typical circuit of a power converter in six pulse application can be found, by way of example, in the company-publication "Thyristors in Technical Application, Vol. 2: Network Guided Power Converters; Siemens AG, Author: G. Möltgen, 1967", in particular, Fig. 72 on page 103 with the accompanying description.

The characteristics of power thyristors are by way of example described in the company publication "Power semiconductors: Network Thyristors; Data Book 1989/90 (siemens AG)", in particular, on the pages starting with page 26.

Even the utilization of thyristors on the primary side of the matching and isolation transformer does not solve the problem. The local interfering fields are reduced in strength since the contribution radiated by means of the stray inductance of the power transformer is eliminated. However, the stray inductances of the feed conductors and the conductor resistivities and/or the corresponding magnitudes of the up-stream transformers now constitute the limiting elements; in this manner the high frequency interferences are distributed over the entire power network.

For the reasons given, up to this point only mechanically adjustable variable transformers have been utilized for power regulation such as, by way of example, the power supplies of the applicant of the type B/MN 250/310 A which, however, are limited with respect to rapid adjustability and exhibit increased weight, space requirements, and production costs.

Publication WO 88/05224 describes a regulated AC/DC converter circuit exhibiting a secondary transformer configuration having a delta and a y-transformer each of which is coupled to a bridge rectifier comprising diodes. A capacitor is connected across the bridge rectifiers and the output circuit exhibits various inductances including transformer elements. The regulation of the converter is achieved by means of a synchronous rectifier circuit coupled through a transformer to a switching converter. The circuit provides no mechanism for adjusting the output voltage or current of the converter.

In view of the above prior art, it is the purpose of the present invention to conceptualize an adjustable direct current high power power supply with which, using thyristors, it is possible to achieve a power regulating current stability of 1 : 100,000 and largely eliminate high frequency interference.

In achieving this purpose, one starts from a high power power supply with power in excess of five kilowatts for the transformation of a three phase alternating voltage into a direct voltage to produce an adjustable highly constant direct current, with a three phase matching and isolation transformer followed by at least one regulatable bridge rectifier exhibiting power thyristors, with phase controlled regulation of the power thyristors, and with at least one charging capacitor at the output of the bridge rectifier circuit. The purpose of the invention is achieved in that the capacitance C of the charging capacitor is dimensioned to be sufficiently large that the commutation of the power thyristors transpires through self-extinguishing in a largely currentless state and during the commutation time, the direct current is delivered largely exclusively by the charging capacitor.

The inventive concept lies essentially therein that, completely contrary to common usage where, in the operation of the bridge rectifiers configured with thyristors an as uniform as possible current extraction is strived for by means of a highly inductive charging choke, one requires that the current in one phase is as close to zero as possible before one switches to the next subsequent phase. In this manner it is possible to essentially eliminate the commutation short circuits causing the strong high frequency interferences. One intentionally avoids the normally used highly inductive choke as an energy storage means - the large charging capacitor proposed in accordance with the invention provides, in this case, the energy storage. This charging capacitor, with its very high capacitance, must be capable of briefly delivering the entire output current, by way of example, six times during one period of the alternating current power.

In accordance with a further feature of the invention, the ratio to the energy stored in the charging capacitor to the energy in the inductive components such as the stray inductance or the matching inductance of the three phase matching and isolation transformer is at least 100 : 1. The stray inductance of the matching and isolation transformer must, together with the remaining inductances, be kept sufficiently small such that, despite the necessary large capacitance of the charging capacitor, sufficiently short and powerful charging pulses occur so that, before the phase voltage sinks below the capacitor voltage, the storage of capacitive energy is sufficiently large for every current pulse. The upstream three phase matching and isolation transformer, contrary to normal practise, does not exhibit a significantly large stray inductance but rather has as small a stray inductance as possible.

When connecting a high power power supply in accordance with the invention onto a three conductor alternating current network with a frequency of 50 Hertz, an output power of 40 kilowatt, a required DC voltage of 100 volts, and an extractable DC current of 400 amperes, it is necessary that the charging capacitor exhibit a capacitance of at least 10,000 microfarads. Such a dimensioning allows for the self-extinguishing operation in accordance with the invention to establishes itself in the bridge rectifier circuit containing the thyristors so that the circuit can operate similar to that of (unregulated) rectifying diodes. Since the off-commutation steepness of the charging current is small (less than 1 A/μsec.), the undesired high frequency contamination of the high power power supply surroundings remains in acceptable limits.

In order to limit the rise of the bridge rectifying circuit charging capacitor charging current it can be advantageous to incorporate a downstream limiting choke whose inductance, including all stray inductances, is less than 1 millihenry. In this fashion the self-extinguishing operation can be just maintained.

An advantageous realizable embodiment of the invention is effected when, in a high power power supply, the three phase matching and isolation transformer has six secondary windings from which three are in a delta and three in a Y configuration, with the Y and delta circuit secondary windings connected to one each of two equally dimensioned six pulse bridge rectifier circuits equipped with power thyristors, with the outputs of both bridge rectifier circuits each being connected to one of two equally large charging capacitors, and each bridge rectifier circuit being regulated by a suitable thyristor regulator, with both charging capacitors connected in parallel by means of two transistor final control elements, and the transistor final control elements are incorporated in the corresponding current path of the direct current and are regulated via a controlled-gain amplifier. Here, each of the delta and Y bridge rectifier connected circuits affects one of two independent charging capacitors whereby the two initially separate output currents are joined into a combined output current in a manner sufficiently free from feedback coupling with the assistance of the transistor final control element. This circuit is chosen since otherwise 12 charging pulses must be divided within a period of the network frequency and 12 currentless phases must be maintained, whereby the load on the charging capacitors would increase very strongly.

Clearly, in order to obtain high DC currents two fully independent bridge rectifier circuits, each with its corresponding charging capacitor, can be connected in series.

Each charging capacitor associated with one of the two bridge rectifying circuits can be dimensioned in accordance with the following rule of thumb:

$$C > \frac{0,05 \times P}{\frac{U}{2}^2 \times f}$$

whereby P is the output power in watts, U is the output voltage in volts, f is the frequency of the three phase power network in Hertz and C the capacitance of the charging capacitor in farads.

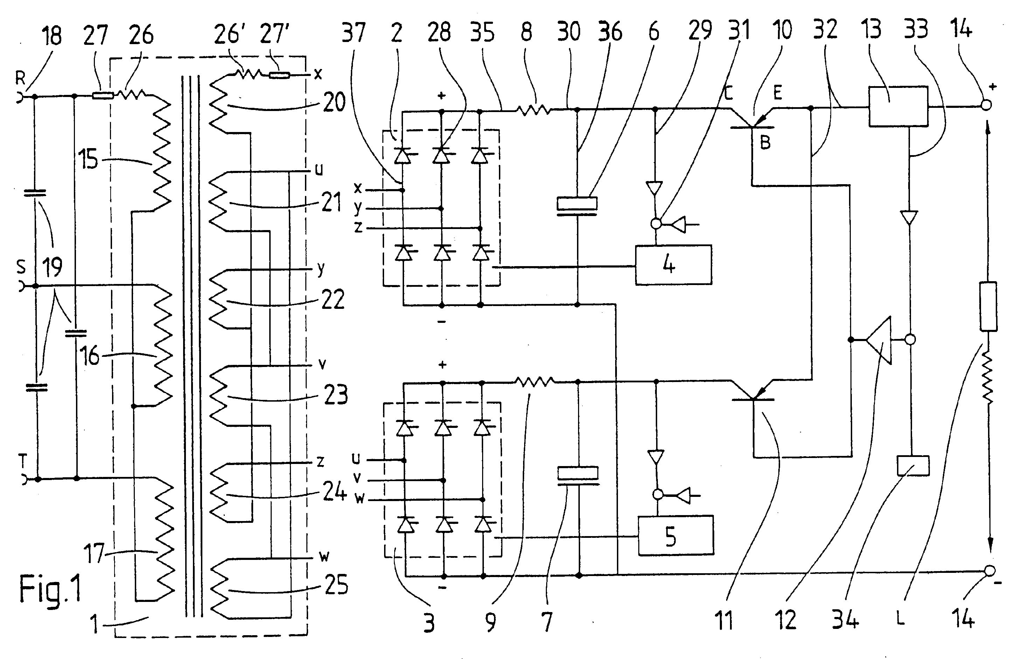

An embodiment of the invention is described in greater detail below with reference to the accompanying drawings. Figure 1 contains the circuit diagram for a 12 pulse high power power supply with an output power of approximately 40 Kilowatts.

The high power power supply essentially includes the following construction elements and/or construction groups:

A three phase matching and isolation transformer 1, a bridge rectifying circuit 2 in Y configuration, a bridge rectifier circuit 3 in delta configuration, a first thyristor regulation 4 for the bridge rectifier circuit 2 in the Y configuration, a second thyristor regulation 5 for the bridge rectifier circuit 3 in the delta configuration, a first charging capacitor 6, a second charging capacitor 7, a first limiting choke 8, a second limiting choke 9, a first transistor final control element 10, a second transistor final control element 11, a control-gain amplifier 12, and a current measurer 13.

On the output terminals 14 of the high power power supply is a mixed resistive/inductive load L, by way of example, the electromagnet of a nuclear spin tomograph.

The three phase matching and isolation transformer 1 contains three equal primary windings 15, 16 and 17 in Y configuration. The input terminals 18 of these primary windings 15, 16, 17 are connected to the three phases R, S, T of a three phase current network and are bridged through three capacitors 19 which compensate for blind current and short-circuit interferences of higher frequency.

The three phase matching and isolation transformer 1 further includes a total of 6 equal secondary windings 20, 21, 22, 23, 24 and 25 from which a first group 20, 22 and 24 is connected in Y configuration and a second group 21, 23 and 25 in delta configuration. 26 and 26′ indicate the stray inductances and 27, 27′ the resistive winding resistances of all primary and secondary windings including iron losses.

The two bridge rectifier circuits 2 and 3 are identically built and configured with equal power thyristors 28. The two thyristor regulators 4 and 5 provide the phase controlled power regulation of the power thyristors 28 of the bridge rectifier circuits 2 and 3. The three bridge branches x, y, z and u, v, w are connected to the respective free terminals x, y, z and u, v and w of the two groups of secondary windings 20 to 25 respectively.

The thyristor regulators 4 and 5 regulate the power thyristors 28 synchronously with the frequency f of the three phase current network; towards this end they are fed (in a manner not shown) a fraction of the voltage of the three phase current network. As control input, the prevailing voltage is fed by means of the control conductor 29 to the final control element 10 which functions as a fine control element and is compared to a reference voltage at junction 31.

The two charging capacitors 6 and 7 are parallel to the respective outputs of the bridge rectifier circuits 2 and 3. The two charging capacitors 6 and 7 are two large batteries of capacitors which consist of parallelly connected electrolytic capacitors with an operating voltage of approximately 200 volts to effect an entire capacitance of, by way of example, 60,000 microfarads.

The two limiting chokes 8 and 9 are connected downstream of the bridge rectifier circuits 2 and 3, lying in the positive current path 30 leading to the charging capacitors 6 and 7. The inductances of the limiting inductors 8 and 9 are each smaller than, by way of example, 0.5 millihenrys. The limiting chokes 8 and 9, together with the stray inductances 26 of the primary and secondary windings 15 to 17 and 20 to 25 of the three phase matching and isolation transformer 1, provide an upper limit to the rise time of the charging capacitor 6 and 7 charging pulses. Depending on the stray inductances the limiting inductors 8 and 9 can also be eliminated.

The transistor final control elements 10 and 11 consist of parallel connected groups of conventional bipolar power transistors from which only one of each is represented. The ends of the two positive current paths 30 are connected to the corresponding collectors C and a common output conductor 32 is connected to both of the two emitters E of the power transistors to combine the output currents into a total output current which flows through the current measure and ends on the positive output terminal 14.

The control-gain amplifier 12 is introduced between a measurement output 33 of the current measurer and the output conductor 32, connected to the bases B of both power transistors. It is a direct current amplifier with a amplification factor on the order of 100,000. By means of the measuring output 33, the control-gain amplifier 12 is fed with a voltage derived from the output current by means of, by way of example, an auxiliary resistance. Furthermore, an extremely constant direct voltage produced by an external voltage source 34 is available as a reference voltage at the input of the control-gain amplifier 12.

Further description of the function of the high power power supply is not required since said functioning is familiar to the one of skill in the art utilizing the depicted circuit diagram .

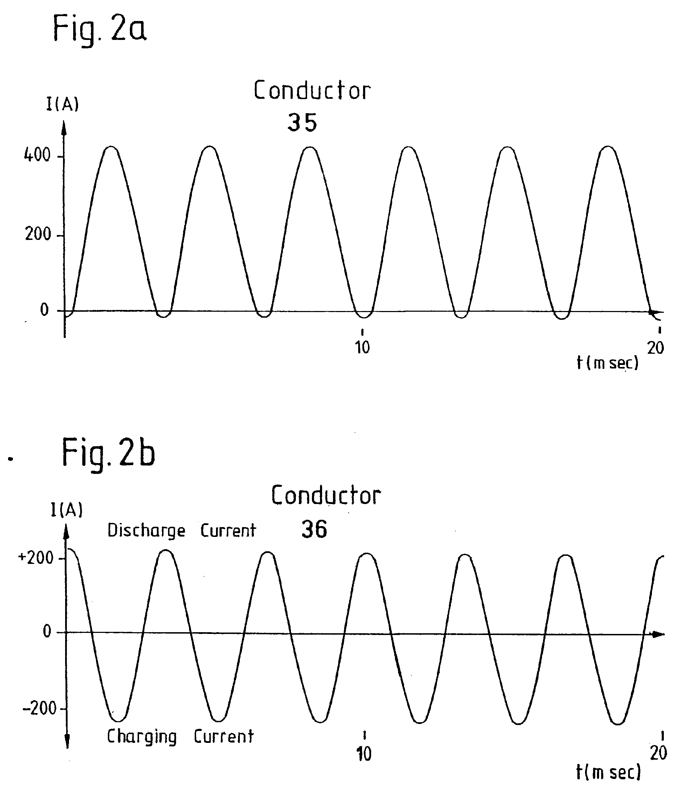

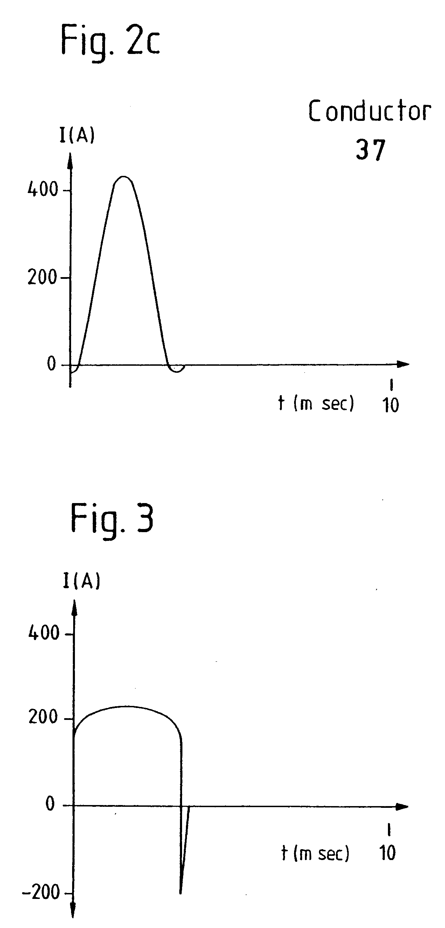

The time variation of the current in various conducting sections is represented in Figures 2a, 2b, 2c and 3 over a period of the alternating current network, in an exemplary fashion, for a six pulse high power power supply in accordance with the invention or for one half of the 12 pulse high power power supply apparatus represented in Fig. 1.

Fig. 2a shows the total current flowing in the conductor 35 that is to say following the bridge rectifier circuit 2. Over a period, by way of example 20 ms, the three power thyristor pairs 28 are sequentially fired and supply six current pulses. Subsequent power thyristor pairs are first fired when the current through the preceding one has fallen at least approximately to zero, that is to say, the commutation transpires in an essentially currentless state. Thereby the characteristic reverse current spikes of thyristor circuits are largely eliminated. The remaining rise and fall times of the current pulses, have largely uncritical time constants. For approximately equal rise and fall times, each maximum current is achieved within approximately 1.4 ms. Even with charging current peaks of, by way of example, 500 A charging current off-commutation times of less than 0.3 amperes per microsecond result, which approximately corresponds to the times of an unregulated rectifier with solid-state diodes. If necessary, a small limiting choke 8 can be utilized to limit the rise times to the 1.4 ms mentioned at full load.

The total current to and from the charging capacitor 6 is represented in Fig. 2b, as measured in conductor 36. There are positive discharge pulses and negative charging pulses which are temporarily coincident with the gaps between the current pulses in Fig. 2a. Fig. 2c shows the current in conductor 37. In accordance with the invention, no large negative reverse currents are seen.

Fig. 3 shows, in a representation analogous to Fig. 2c, the temporal current dependence which results when the commutation, according to prior art, does not transpire in a currentless state. Sharp current peaks occur, leading to the unacceptable interferences. In contrast to the situation in Fig. 2, in Fig. 3, the limiting choke 8 was introduced with a large inductance value of prior art.

### Summary of the Utilized Reference Symbols

| | |
|---|---|
| 1 | three phase matching and isolation transformer |
| 2 | bridge rectifier circuit |
| 3 | bridge rectifier circuit |
| 4 | thyristor regulation |
| 5 | thyristor regulation |
| 6 | charging capacitor |
| 7 | charging capacitor |
| 8 | limiting choke |
| 9 | limiting choke |
| 10 | transistor final control element |
| 11 | transistor final control element |
| 12 | control-gain amplifier |
| 13 | current measurer |
| 14 | output terminals |
| L | load |
| 15 | primary winding |
| 16 | primary winding |
| 17 | primary winding |
| 18 | input terminals |
| R | phase |
| S | phase |
| T | phase |
| 19 | capacitors |
| 20 | secondary winding |
| 21 | secondary winding |
| 22 | secondary winding |

| 23 | secondary winding |
|---|---|
| 24 | secondary winding |
| 25 | secondary winding |
| 26, 26′ | stray inductances |
| 27, 27′ | winding resistances |
| 28 | power thyristors |
| 29 | regulation conductor |
| 30 | direct current path |
| 31 | junction |
| C | collector |
| E | emitter |
| 32 | output power |
| 33 | measuring output |
| B | base |
| 34 | voltage source |
| 35 | conductor |
| 36 | conductor |
| 37 | conductor |

## Claims

1. High power power supply for power in excess of 5 Kilowatts for the transformation of a three phase alternating voltage into direct voltage for the purpose of producing an adjustable very constant direct current with

   - a three phase matching and isolation transformer;
   - at least one downstream regulatable bridge rectifier circuit exhibiting power thyristors;
   - a phase control regulator for the power thyristors; and
   - at least one charging capacitor (6, 7) at the output of the bridge rectifier circuit having a capacitance C which is sufficiently large that the commutation of the power thyristors (28) transpires in a self-extinguishing fashion in a largely currentless state and during the commutation time the direct current is delivered largely by the charging capacitor (6, 7), whereby the ratio of the energy stored in the charging capacitor (6, 7) to the energy in the inductive components such as stray inductances or matching inductances (26, 26′) of the three phase matching and isolation transformer (1) is at least 100 : 1 and whereby the three phase matching and isolation transformer (1) carries 6 secondary windings (20, 21, 22, 23, 24 and 25) from which three (20, 22, 24) are connected in delta and three (21, 23, 25) in Y configuration;
   - on each of the delta connected secondary windings (20, 22, 24) and the Y connected secondary windings (21, 23 and 25) is connected one of two equally dimensioned six pulse bridge rectifier circuits (2, 3) with power thyristors 28;
   - the output of each of the two rectifier circuits (2, 3) is connected to one of two equally large charging capacitors (6, 7);
   - each bridge rectifier circuit (2, 3) is regulated from an appropriate thyristor regulator (4, 5);
   - the two charging capacitors (6, 7) are connected in parallel via two transistor final control elements (10, 11);
   - the transistor final control elements (10, 11) are implemented in respective current paths (30) of the direct current and are regulated through a control-gain amplifier (12).

2. High power power supply in accordance with claim 1, characterized in that the charging capacitor (6, 7) exhibits a capacitance of at least 10,000 Microfarads.

3. High power power supply according to one of the claims 1 or 2, characterized in that a limiting inductor (8), whose inductance is less than 1 millihenry, follows the bridge rectifier circuit (2 or 3).

4. High power power supply according to one of the claims 1 through 3, characterized in that each charging capacitor (6, 7) is dimensioned in accordance with the following prescription:

$$C > \frac{0.05\,P}{\frac{U^2}{2}\,f}$$

whereby P is the output power in watts, U the output voltage in volts, f the frequency of the three phase power network in Hertz, and C the capacitance of the charging capacitor in farads.

**Patentansprüche**

1. Hochleistungs-Netzgerät für eine Leistung von über 5 Kilowatt für die Transformation einer Dreiphasen-Wechselspannung in eine Gleichspannung zum Erzeugen eines einstellbaren sehr konstanten Gleichstroms mit
   - einem Dreiphasen-Anpassungs- und Isolationstransformator;
   - mindestens einer stromabwärts angeordneten regulierbaren Brückengleichrichter-Schaltung mit Leistungsthyristoren;
   - einem Phasen-Steuerregulator für die Leistungsthyristoren; und
   - mindestens einem Ladekondensator (6, 7) am Ausgang der Brückengleichrichter-Schaltung mit einer Kapazität C, die ausreichend groß ist, daß die Umschaltung der Leistungsthyristoren (28) in einer selbstlöschenden Art in einen weitgehend stromfreien Zustand übergeht und während der Umschaltzeit der Gleichstrom weitgehend von dem Ladekondensator (6, 7) geliefert wird, wobei das Verhältnis der in dem Ladekondensator (6, 7) gespeicherten Energie zu der Energie in den induktiven Komponenten, wie Streuinduktivitäten oder Anpassungsinduktivitäten (26, 26′) des Dreiphasen-Anpassungs- und Isolationstransformators (1), mindestens 100 : 1 ist, und wobei
   der Dreiphasen-Anpassungs- und Isolationstransformator (1) 6 sekundäre Wicklungen (20, 21, 22, 23, 24 und 25) aufweist, von welchen drei (20, 22, 24) in einer Delta- und drei (21, 23, 25) in einer Y-Anordnung verbunden sind;
   an jeder der in Delta-Form verbundenen sekundären Wicklungen (20, 22, 24) und der in Y-Form verbundenen sekundären Wicklungen (21, 23 und 25) eine der zwei gleich dimensionierten sechs Impuls-Brückengleichrichter-Schaltungen (2, 3) mit Leistungsthyristoren 28 verbunden ist;
   der Ausgang jeder der zwei Gleichrichter-Schaltungen (2, 3) mit einem der zwei gleich langen Ladekondensatoren (6, 7) verbunden ist;
   jede Brückengleichrichter-Schaltung (2, 3) von einem entsprechenden Thyristor-Regulator (4, 5) reguliert wird;
   die zwei Ladekondensatoren (6, 7) parallel über zwei Transistor-End-Steuerelemente (10, 11) verbunden sind; die Transistor-End-Steuerelemente (10, 11) in entsprechende Strompfade (30) des Gleichstroms eingesetzt sind und durch einen Steuer-Zuwachsverstärker (12) reguliert werden.

2. Hochleistungs-Netzgerät nach Anspruch 1, dadurch gekennzeichnet, daß der Ladekondensator (6, 7) eine Kapazität von mindestens 10.000 Mikrofarad aufweist.

3. Hochleistungs-Netzgerät nach einem der Ansprüche 1 oder 2, dadurch gekennzeichnet, daß ein Begrenzungsinduktor (8), dessen Induktivität weniger als ein 1 Millihenry ist, der Brückengleichrichter-Schaltung (2 oder 3) folgt.

4. Hochleistungs-Netzgerät nach einem der Ansprüche 1 bis 3, dadurch gekennzeichnet, daß jeder Ladekondensator (6, 7) gemäß der folgenden Vorschrift dimensioniert ist:

$$c > \frac{0{,}05\,P}{\frac{U^2}{2}\,f}$$

wobei P die Ausgangsleistung in Watt, U die Ausgangsspannung in Volt, f die Frequenz des Dreiphasen-Leistungsnetzes in Hertz und C die Kapazität des Ladekondensators in Farad ist.

**Revendications**

1. Alimentation en énergie à haute puissance pour des puissances dépassant 5 kilowatts destinées à la transformation d'une tension alternative triphasée en une tension continue dans le but de produire un courant continu réglable très stable comportant

- un transformateur d'adaptation et d'isolation triphasé,
- au moins un circuit de redressement en pont régulé en aval comportant des thyristors de puissance,
- un régulateur à commande en phase pour les thyristors de puissance, et
- au moins un condensateur de charge (6, 7) à la sortie du circuit de redressement en pont présentant une capacité C qui est suffisamment grande pour que la commutation des thyristors de puissance (28) se déroule suivant un mode d'autoextinction dans un état largement dépourvu de courant et pour que pendant le temps de la commutation, le courant continu soit délivré largement par le condensateur de charge (6, 7), d'où il résulte que le rapport de l'énergie stockée dans le condensateur de charge (6, 7) à l'énergie résidant dans les composants inductifs tels que les inductances parasites ou les inductances d'adaptation (26, 26') du transformateur d'adaptation et d'isolation triphasé (1) soit au moins de 100 : 1 et d'où il résulte que le transformateur d'adaptation et d'isolation triphasé (1) comporte 6 enroulements secondaires (20, 21, 22, 23, 24 et 25) dont trois (20, 22, 24) sont reliés suivant une configuration en triangle et trois (21, 23, 25) suivant une configuration en étoile ou en Y,
- sur chacun des enroulements secondaires reliés suivant une configuration en triangle (20, 22, 24) et des enroulements secondaires reliés suivant une configuration en étoile (21, 23 et 25), est relié l'un de deux circuits de redressement en pont à six impulsions dimensionnés de façon identique (2, 3) comportant des thyristors de puissance 28,
- la sortie de chacun des deux circuits de redressement (2, 3) est reliée à l'un de deux condensateurs de charge de taille identique (6, 7),
- chaque circuit de redressement en pont (2, 3) est régulé par un régulateur à thyristors approprié (4, 5),
- les deux condensateurs de charge (6, 7) sont reliés en parallèle par l'intermédiaire de deux éléments de commande finaux à transistors (10, 11),
- les éléments de commande finaux à transistors (10, 11) sont réalisés dans les lignes de courant respectives (30) du courant continu et sont régulés par l'intermédiaire d'un amplificateur à gain commandé (12).

2. Alimentation en énergie à haute puissance selon la revendication 1, caractérisée en ce que le condensateur de charge (6, 7) présente une capacité d'au moins 10 000 microfarads.

3. Alimentation en énergie à haute puissance selon l'une des revendications 1 ou 2, caractérisée en ce qu'un inducteur de limitation (8), dont l'inductance est inférieure à 1 millihenry, suit le circuit de redressement en pont (2 ou 3).

4. Alimentation en énergie à haute puissance selon l'une des revendications 1 à 3, caractérisée en ce que chaque condensateur de charge (6, 7) est dimensionné conformément à la prescription suivante :

$$C > \frac{0{,}05 \times P}{\frac{U^2}{2} \times f}$$

dans laquelle P représente la puissance de sortie en watts, U la tension de sortie en volts, f la fréquence du réseau d'alimentation triphasé en Hertz, et C la capacité du condensateur de charge en farads.

Fig.1

# Fig. 2a

Conductor
**35**

I(A)

400

200

0

10

20

t (m sec)

# Fig. 2b

Conductor
**36**

I(A)

Discharge Current

+200

0

-200

Charging Current

10

20

t (m sec)

# Fig. 2c

Conductor
**37**

# Fig. 3